# EUROPEAN PATENT APPLICATION

(11) **EP 4 708 174 A1**
(43) Date of publication of application: **11.03.2026**
(21) Application number: 24306460.7
(22) Date of filing: 05.09.2024
(51) Int. Cl.: G06Q 20/40, G06Q 20/12, G06Q 20/32, G06Q 20/38, G07F 7/12

(54) **METHOD AND PAYMENT SYSTEM FOR MANAGING A PAYMENT TRANSACTION**

(71) Applicant: THALES DIS FRANCE SAS, 92190 Meudon (FR)
(72) Inventor: LENGELLÉ, Denis, 83330 Le Beausset (FR); MAPELLI, Valentin, 83500 La Seyne sur Mer (FR)
(74) Representative: Grevin, Emmanuel

(57) **Abstract**

The invention is a method for managing a payment transaction by a merchant application (20) requiring a card security code, CSC, of a payment instrument (50) which has either a first type for which bank application (40) delivers the CSC or a second type for which the payment instrument delivers the CSC. The merchant application uses a subset of an identifier (51) of the payment instrument to query a lookup server (30) to get confirmation that the payment instrument has the first type and, if so:
the merchant application receives identification data (41) of the bank application, then offers a user to retrieve the CSC from the bank application, and following an agreement, uses the identification data to retrieve the CSC, then receives the CSC only if the bank application successfully authenticated the user, and, upon getting user's consent to continue, continues the payment transaction with both said identifier and CSC.

## Description

### (Field of the invention)

The present invention relates to methods for managing a payment transaction using a payment instrument. It relates particularly to methods of managing payment transactions carried out in the field of e-commerce.

### (Background of the invention)

During an e-commerce transaction, funds are electronically exchanged through a website or a dedicated application for buying a product or a service. Such a commerce transaction is conducted using payment parameters assigned to a payment instrument. Usually, these payment parameters are checked by a bank server that authorizes or rejects the transaction.

A payment instrument can be a physical payment device like an integrated circuit card which may have a form of a smart card. A payment instrument can also be a digitalized payment card, or a virtual payment card hosted either in a personal device like a smartphone or in a banking server for instance.

A user is usually requested to provide parameters specific to the payment instrument chosen for performing the payment transaction. These specific parameters can include the name of the cardholder, an expiry date, a primary account number (PAN) and a card security code (CSC) also known as card verification code (CVV).

The document US10467622B1 discloses a method in which a form comprising payment fields is automatically filled.

The document US2023/0351366A1 discloses a method using the tap of a card to trigger auto filling of card data.

### (Summary of the Invention)

The cardholder (i.e. user of the payment card) can read the card security code on the back of the card or read it in a bank application. In both cases, the cardholder must manually type the card security code in the merchant application. This operation may lead to typing error and is not convenient for the cardholder. The problem is even more acute when the card security code is dynamic, that is to say that its value is not fixed.

One of the consequences can be the abandonment of the current purchase. This constitutes an economic loss for sellers/merchants and does not meet customer expectations.

It would be desirable to simplify or make more convenient the procedure for carrying out an online payment transaction from the customer's point of view.

The invention aims at solving the above-mentioned technical problem.

An object of the present invention is a computer-implemented method for managing a payment transaction by a merchant application requiring a card security code (CSC) specific to a payment instrument assigned to a user. The payment instrument is either of a first type for which the CSC can be retrieved from a bank application separate from the merchant application, or of a second type for which the CSC is provided only by the payment instrument. During the payment transaction, the merchant application uses a subset of an identifier specific to the payment instrument to query a lookup server to get confirmation that the payment instrument is of the first type and, if so:
the merchant application receives a response containing identification data assigned to the bank application,
then, the merchant application offers the user to retrieve the CSC from the bank application, and following an agreement of the user, the merchant application uses the identification data to query the bank application for the CSC, then receives the CSC only if the bank application performed a successful authentication of the user, and
upon getting a consent of the user to continue the payment transaction, the merchant application continues the payment transaction with both said identifier and CSC.

Advantageously, the identifier specific to the payment instrument may be the primary account number and said subset may be the Issuer Identification Number (IIN) or the Bank Identification Number (BIN).

Advantageously, the identification data may comprise at least a Uniform Resource Identifier (URI) assigned to the bank application.

Advantageously, the merchant application may query the bank application for the CSC by sending a query message containing a reference of the payment instrument which may be a serial number of the payment instrument, a hash of said identifier of the payment instrument, an extract of said identifier of the payment instrument or an expiration date of the payment instrument.

Advantageously, the merchant application may get the consent of the user provided by the user during the payment transaction or retrieve the consent of the user from a pre-populated non-volatile memory accessible by the merchant application.

Advantageously, the merchant application may offer the user to retrieve the CSC from the bank application by triggering the display of a redirect button on a device of the user.

Advantageously, the payment instrument may be a payment chip card, a payment bracelet, a payment ring, a digital payment card hosted by a user's device or a virtual payment card whose payment parameters are accessible by the user through a card management system.

Advantageously, the merchant application may be hosted in a phone of the user and the bank application may be either hosted in the phone or hosted in a remote bank server.

Advantageously, the merchant application may be a web application hosted in a remote merchant server and the bank application may be hosted in a remote bank server.

Another object of the present invention is a payment system comprising a merchant application requiring a card security code (CSC) specific to a payment instrument assigned to a user for managing a payment transaction. The payment instrument is either of a first type for which the CSC can be retrieved from a bank application separate from the merchant application, or of a second type for which the CSC is provided only by the payment instrument. The payment system comprises the bank application and a lookup server which is configured to receive, during the payment transaction, from the merchant application a query message comprising a subset of an identifier specific to the payment instrument, said query message aiming at getting confirmation that the payment instrument is of the first type and, if so:
the lookup server is configured to send to the merchant application a response containing identification data assigned to the bank application,
the merchant application is configured to offer the user to retrieve the CSC from the bank application, and following an agreement of the user, the merchant application is configured to use the identification data to query the bank application for the CSC,
the bank application is configured to send the CSC to the merchant application only if the bank application performed a successful authentication of the user, and
upon getting a consent of the user to continue the payment transaction, the merchant application is configured to continue the payment transaction with both said identifier and CSC.

Advantageously, the merchant application may be configured to query the bank application for the CSC by sending a query message containing a reference of the payment instrument which is a serial number of the payment instrument, a hash of said identifier of the payment instrument, an extract of said identifier of the payment instrument or an expiration date of the payment instrument.

Advantageously, the merchant application may be configured to get the consent of the user provided by the user during the payment transaction or to retrieve the consent of the user from a pre-populated non-volatile memory accessible by the merchant application.

Advantageously, the merchant application may be configured to offer the user to retrieve the CSC from the bank application by triggering the display of a redirect button on a device of the user.

### (Brief description of the drawings)

Other characteristics and advantages of the present invention will emerge more clearly from reading the following description of a number of preferred embodiments of the invention with reference to the corresponding accompanying drawings in which:
- Fig. 1 shows a flow diagram for managing an online payment transaction according to an example of the invention,
- Fig. 2 shows a first example of diagram of architecture of a payment system for managing an online payment transaction according to an example of the invention,
- Fig. 3 shows a second example of diagram of architecture of a payment system for managing an online payment transaction according to an example of the invention, and
- Fig. 4 shows a third example of diagram of architecture of a payment system for managing an online payment transaction according to an example of the invention.

### (Detailed description of the preferred embodiments)

The invention may apply to any type of biometric payment instrument usually associated with a user (also called cardholder). The payment instrument may be implemented in a wide variety of portable form factors such as physical chip card, smartwatch, or wearable device like a payment bracelet, a payment ring for instance. The payment instrument may also be implemented as a digital payment card hosted by a personal device of the user or a virtual payment card whose payment parameters are remotely accessible by the user through a card management system.

Some physical payment instruments may be designed to provide the user with all payment parameters intrinsic to the payment instrument (like the Primary Account Number, the expiry date, or the card security code). In the case of a smart card, some of these payment parameters may be printed on the card body and the card may embed a screen that displays a valid card security code whose value may change periodically according to a preset security rule shared with the server acting on behalf of the bank that issued the payment card.

Some physical payment instruments may be designed to provide the user with their payment parameters intrinsic to the payment instrument except the dynamic card security code whose value is reachable by the user through a banking application. The banking application may be either installed in another personal portable device like a smartphone or a connected watch for instance or may be a web application hosted in a remote bank server and accessible via a web browser.

In the case of digital or virtual payment instruments, all their payment parameters may be retrieved by the user from a banking application installed in their personal portable device or through a card management system hosted by a remote server.

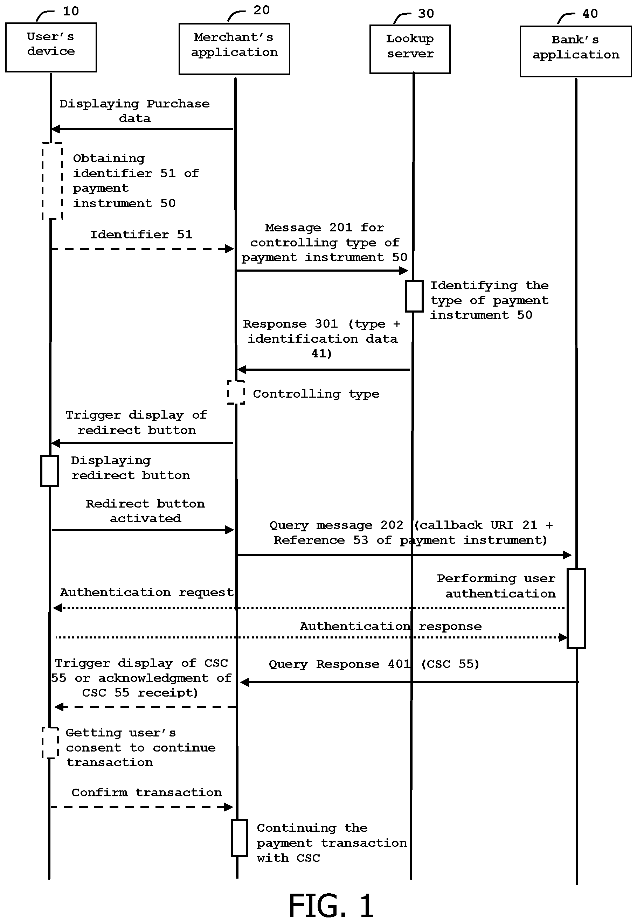

Figure 1 depicts a flow diagram for managing an online payment transaction according to an example of the invention.

The customer (also the user) uses a device 10 to access a merchant application 20 for carrying out a payment transaction. The purchase may be done for buying a physical product or for getting access to a digital data or feature for instance.

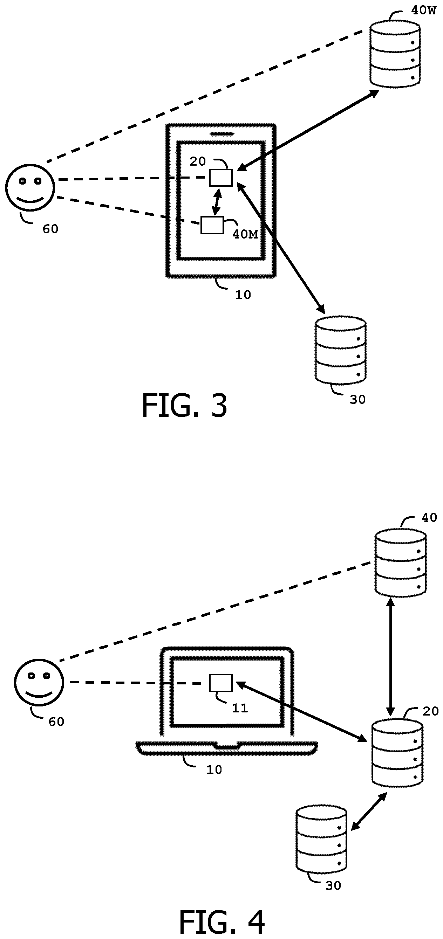

Once the user has selected the desired service or product, the merchant application 20 initiates an online payment transaction and triggers the display of a payment form on the user's device 10. As will be described in relation with Fig. 3 and Fig. 4, the user's device can be a laptop or a smartphone for instance. By displaying the payment form, the merchant server requests the user to enter or confirm the payment parameters specific to a payment instrument chosen by the user.

At this stage the user can select an appropriate payment instrument if multiple payment instruments are available. In particular, the user may choose a payment instrument whose valid card security code (CSC) can be retrieved from a bank application 40 separate from the merchant application. Such a payment instrument is said as being of the first type (or having the first type). The bank application may be a bank application hosted in the user's device, in another a personal device of the user (like a personal digital assistant (PDA) or a connected watch for instance), or in a remote bank server.

Alternatively, the user may choose a payment instrument for which the card security code is provided only by the payment instrument. Such a payment instrument is said as being of the second type. A payment instrument of the second type may directly provide a valid card security code to the user through a screen (or speaker) embedded in the payment instrument for instance. Alternatively, the card security code may be printed on the body of the payment instrument.

Assuming the user has selected a payment instrument of the first type for the pending payment transaction, now the user provides the merchant's application 20 with an identifier 51 specific to the payment instrument. For instance, the identifier 51 may be the primary account number (PAN) uniquely assigned to the payment instrument. In some embodiments, the user may identify the chosen payment instrument with an appropriate reference (e.g. "card#2" or "debit card") cand the merchant's application 20 may retrieve the identifier 51 from a pre-populated repository.

At this stage, the payment transaction is in progress and the merchant's application 20 uses a subset of the identifier 51 of the payment instrument to query a lookup server 30 to get confirmation that the payment instrument is of the first type. For instance, the merchant's application 20 may send to the lookup server 30 a message 201 containing the subset of the identifier 51. In some embodiments, the subset of the identifier 51 can be the Issuer Identification Number (IIN) also known as Bank Identification Number (BIN) which is usually made of the first six or eight digits of the primary account number (PAN). In some embodiments, the subset of the identifier 51 can be the full PAN.

If the payment instrument is of the first type, the lookup server 30 prepares and sends to the merchant's application 20 a response 301 containing identification data 41 assigned to the bank application. The identification data 41 may be a Uniform Resource Identifier (URI) allowing to access the bank application 40. In some embodiments, the response 301 may also contain the type (or a reference to the type) of the payment instrument.

Data exchanged between the merchant application 20 and the lookup server 30 may be protected using conventional security mechanisms.

Upon receipt of the response 301, the merchant application 20 may offer the user to retrieve the CSC from the bank application 40. Preferably, the merchant application 20 offers the user to retrieve the CSC from the bank application by triggering the display of a redirect button on the user device 10.

Following the agreement (to retrieve the CSC from the bank application 40) of the user, the merchant application uses the identification data 41 to query the bank application for the CSC. In other words, the user is redirected to the bank application to trigger the provision of a valid CSC which is conditioned by successful authentication of the user by the bank application.

For instance, the merchant application 20 may send to the bank application 40 a query message 202 comprising a reference 53 of the payment instrument, the cardholder's name and a callback URI 21 allowing to send a response to the merchant application 20. In some embodiments, the reference 53 may contain the serial number of the payment instrument, a hash of the identifier 51 of the payment instrument, an extract of the identifier 51 of the payment instrument (like the last four digits) or the expiration date of the payment instrument.

Then the bank application 40 attempts to authenticate the user. Depending on the configuration, the bank application may get credentials of the user through the user's device 10 (by exchanging an authentication request and an authentication response with the user's device 10 for instance) or another device of the user.

In some embodiments the authentication of user can be performed using conventional mechanisms like password, biometrics (fingerprint or face), email, SMS, one-time password for instance.

Upon successful authentication of the user, the bank application 40 obtains the CSC 55 of the payment instrument, then generates and sends to the merchant application 20 a query response 401 comprising the CSC. The bank application 40 sends the query response 401 to the callback URI 21.

In some embodiments, the CSC may be encrypted by bank application 40 using a public key of the merchant application 20 for security reasons. The merchant application 20 may include its public key in the query message 202 and decrypt the received encrypted CSC using its own private key.

In some embodiments, the merchant application 20 may obtain a signature reflecting its own identity and include it in the query message 202 so that the bank application may verify the identity of the merchant application 20.

In some embodiments the merchant application 20 may trigger the display of the CSC (or an acknowledgement of the receipt of the CSC) on the user's device 10.

Then the merchant application 20 may get the consent of the user to continue the payment transaction through a user interface of the device 10 or as a prestored choice. In other words, the merchant application may get the consent provided by the user during the payment transaction or may retrieve the consent from a pre-populated non-volatile memory accessible by the merchant application. Then the merchant application 20 may continue the payment transaction with both the identifier 51 of the payment instrument and the received CSC. The payment transaction may continue following a traditional payment flow. In particular, the merchant application 20 can continue the transaction using other parameters such as the name of the user, and the expiration date of the payment instrument.

If the response 301 sent by the lookup server 30 reflects the fact that the payment instrument is of the second type or of the bank application does not send a CSC, the merchant application 20 may attempt to get the CSC in a conventional way, for example by requesting the user to manually enter the card security code.

The card security code may be also a Card Verification Value (CW), a Card Verification Code (CVC), a Card Security Number (CSN), or a Card Verification Number (CVN).

In some embodiments, the card security code 55 can have a dynamic value which is generated to be valid for a predefined period, a limited cumulative sum of money (i.e. amount spent over multiple transactions), a limited number of payment transactions, or any combination of these limiting parameters. Such a card security code is called a dynamic card security code.

In some embodiments, the card security code 55 can have a fixed value. Such a card security code is called a static card security code.

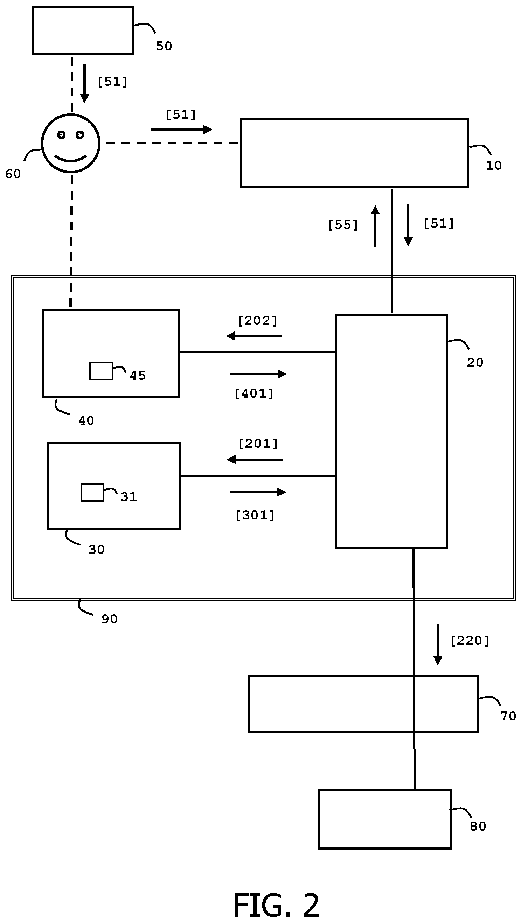

Figure 2 depicts a first example of diagram of architecture of a payment system 90 for managing an online payment transaction according to an example of the invention.

The payment system 90 comprises a merchant application 20 which requires the card security code (CSC), specific to a payment instrument for managing a payment transaction.

The payment system 90 is configured to manage payment transactions involving a payment instrument which may be either of a first type for which the CSC can be retrieved from a bank application separate from the merchant application, or of a second type for which the CSC is provided only by the payment instrument.

The payment instrument may be a payment chip card, a payment bracelet, a payment ring, a digital payment card hosted by a user's device or a virtual payment card whose payment parameters are accessible by the user through a card management system.

The payment system 90 comprises a bank application 40 able to provide valid card security codes for a set of the payment instruments. The payment system 90 comprises a lookup server 30 which is configured to receive, during the payment transaction, from the merchant application a query message comprising a subset of an identifier 51 specific to the payment instrument. The query message aims at getting confirmation that the payment instrument is of the first type. If the payment instrument has the first type, the lookup server is configured to send to the merchant application a response 301 containing identification data 41 assigned to the bank application.

The merchant application 20 is configured to offer the user 60 to retrieve the CSC from the bank application, and following an agreement of the user, the merchant application is configured to use the identification data 41 to query the bank application for the CSC. In particular, the merchant application 20 may be adapted to display a specific button (or option/menu) in the payment form displayed on the user's device 10. The specific button (also called redirect button) allows the merchant application 20 to get the agreement of the user to request, from the bank application 40, a CSC valid for the payment instrument.

The bank application 40 may comprises a code manager 45 designed to obtain a valid CSC for a target payment instrument. The code manager 45 may generate on-the-fly the CSC or retrieve it from a pre-populated repository.

The bank application is configured to send a valid CSC 55 to the merchant application only if the bank application 40 performed a successful authentication of the user 60.

Upon getting a consent of the user 60 to continue the payment transaction, the merchant application 20 is configured to continue the payment transaction with both the identifier 51 and the CSC 55.

To finalize the pending payment transaction, a conventional flow can be applied in which the merchant's application 20 requests the authorization from a bank authorization server 80 to complete the payment transaction. Typically, the merchant application 20 may send an authorization request 220 to a conventional payment scheme network 70 which in turn may forward the authorization request 220 to the appropriate bank authorization server 80.

The lookup server 30 can be implemented as a hardware server comprising a hardware processor and program instructions designed to provide the functions of the lookup server 30 required by the different embodiments of the invention when executed by the hardware processor.

The lookup server 30 may contain a pre-populated repository 31 which stores the type of a batch of payment instrument and identification data of their associated bank applications.

The user 60 interacts with the merchant application 20 through a user's device 10 which may be a desktop computer, a laptop, a phone, a tablet PC or a PDA for instance.

Figure 3 depicts a second example of diagram of architecture of a payment system for managing an online payment transaction according to an example of the invention.

In this example, the user's device 10 is a smartphone. The merchant application 20 is a mobile application hosted in the smartphone 10 of the user and the bank application may be deployed under two forms: a mobile application 40M hosted in the phone 10 and/or a web application 40W hosted in a remote bank server.

The merchant application 20 may prefill (or get from the user) parameters of the payment instrument such as identifier 51, name of the user, expiration date for instance. The merchant application 20 may automatically query the lookup server 30 to know the type of the payment instrument. In response, the lookup server 30 may inform the merchant application 20 that the payment instrument is of the first type and return identification data 41 related to the bank application able to provide a valid CSC assigned to the payment instrument.

In some embodiments, the identification data 41 may contain both the URI of the mobile application 40M and the URI of the web application 40W. Upon receipt of the response, the merchant application 20 may check that the payment instrument is of the first type then apply a preset selection policy to choose which bank application will be used to get the CSC. For instance, the merchant application 20 may check that the mobile application 40M is installed in the smartphone 10 and select it as a preferred option. If the mobile application 40M is not available in the smartphone 10, the merchant application 20 may select web application 40W. In such a case, the merchant application 20 may use the URI of the web application 40W to both open a WebView in a browser (not shown in Fig. 3) of the smartphone 10 to trigger access to the web application 40W which is assumed to be hosted in a remote bank server. Then the web application 40W may request the user to provide authentication data through the browser (e.g. WebView) of the smartphone.

Preferably, the merchant application 20 provides a callback URI to the web application 40W (for instance in the data sent to the remote bank server for launching execution of the web application 40W) and the web application 40W sends back its response containing the CSC to the merchant application 20 by addressing the response to callback URI.

In some embodiments, the merchant application 20 may be configured to propose to the user to install the mobile application 40M in the smartphone 10 and access the web application 40W only as a fallback solution.

Figure 4 depicts a third example of diagram of architecture of a payment system for managing an online payment transaction according to an example of the invention.

In this example, the user's device 10 is a laptop or a desktop computer containing a web browser 11. The merchant application 20 is a web application hosted in a remote merchant server and the bank application is a web application 40 hosted in a remote bank server.

Once the merchant application 20 gets some parameters of the payment instrument required for the payment transaction, the merchant application 20 may query the lookup server 30 to know the type of the payment instrument. In response, the lookup server 30 may explicitly or implicitly inform the merchant application 20 that the payment instrument is of the first type and return identification data 41 related to the bank application able to provide a CSC valid for the payment instrument.

In some embodiments, the identification data 41 may contain only the URI of the web application 40.

Upon receipt of the response, the merchant application 20 may check that the payment instrument is of the first type, then use the received URI of the web application 40 to both open a WebView in the browser 11 to trigger launching of the web application 40 which is assumed to be hosted in a remote bank server. Then the web application 40 may request the user to provide authentication data through the browser or through another device of the user, like a phone, a PDA, a tablet PC or a connected watch for instance.

In case of successful authentication of the user, the web application 40 sends back a response containing the CSC to the merchant application 20 by addressing the response to callback URI initially provided by the merchant application 20.

Depending on the implementation, the URI can be a Uniform Resource Locator (URL) or an Application Identifier (AID) for instance.

Each of the merchant server, the bank server and the lookup server 30 can be implemented as a hardware server comprising one or more hardware processors and a set of program instructions designed to provide the functions of these servers required by the different embodiments of the invention when executed by the hardware processor(s).

These servers and the user's device 10 each have a communication interface allowing them to communicate together and exchange messages or data. They may establish communication channels through a combination of a wired network (like the Internet) and a Telecom network for instance. They may be configured to communicate through any combination of public or private network.

Thanks to some embodiments o the invention, the user is relieved of the task of manually entering the card security code. In addition to streamlining the payment transaction process and reducing the friction, this avoids data entry errors.

Moreover, the user authentication performed by the bank application ensures that only the legitimate user can trigger the provision of the card security code which is necessary for the payment transaction.

## Claims

1. A computer-implemented method for managing a payment transaction by a merchant application (20) requiring a card security code, CSC, (55) specific to a payment instrument (50) assigned to a user,
wherein the payment instrument is either of a first type for which the CSC (55) can be retrieved from a bank application (40) separate from the merchant application, or of a second type for which the CSC is provided only by the payment instrument,
wherein, during the payment transaction, the merchant application uses a subset of an identifier (51) specific to the payment instrument to query a lookup server (30) to get confirmation that the payment instrument is of the first type and, if so:
the merchant application receives a response (301) containing identification data (41) assigned to the bank application,
then, the merchant application offers the user to retrieve the CSC from the bank application, and following an agreement of the user, the merchant application uses the identification data (41) to query the bank application for the CSC, then receives the CSC only if the bank application performed a successful authentication of the user, and
upon getting a consent of the user to continue the payment transaction, the merchant application continues the payment transaction with both said identifier (51) and CSC (55).

2. The method according to claim 1, wherein the identifier (51) specific to the payment instrument is the primary account number and wherein said subset is the Issuer Identification Number or the Bank Identification Number.

3. The method according to any preceding claims, wherein the identification data (41) comprises at least a Uniform Resource Identifier assigned to the bank application.

4. The method according to any preceding claims, wherein the merchant application queries the bank application for the CSC by sending a query message (202) containing a reference (53) of the payment instrument which is a serial number of the payment instrument, a hash of said identifier (51) of the payment instrument, an extract of said identifier (51) of the payment instrument or an expiration date of the payment instrument.

5. The method according to any preceding claims, wherein the merchant application gets the consent of the user provided by the user during the payment transaction or retrieves the consent of the user from a pre-populated non-volatile memory accessible by the merchant application.

6. The method according to any preceding claims, wherein the merchant application offers the user to retrieve the CSC from the bank application by triggering the display of a redirect button on a device (10) of the user.

7. The method according to any preceding claims, wherein the payment instrument is a payment chip card, a payment bracelet, a payment ring, a digital payment card hosted by a user's device or a virtual payment card whose payment parameters are accessible by the user through a card management system.

8. The method according to claim 1, wherein the merchant application is hosted in a phone (10) of the user and the bank application is either hosted in said phone or hosted in a remote bank server.

9. The method according to claim 1, wherein the merchant application is a web application hosted in a remote merchant server and the bank application is hosted in a remote bank server.

10. A payment system (90) comprising a merchant application (20) requiring a card security code, CSC, (55) specific to a payment instrument (50) assigned to a user for managing a payment transaction,
wherein the payment instrument is either of a first type for which the CSC (55) can be retrieved from a bank application (40) separate from the merchant application, or of a second type for which the CSC is provided only by the payment instrument,
wherein, the payment system comprises the bank application and a lookup server (30) which is configured to receive, during the payment transaction, from the merchant application a query message comprising a subset of an identifier (51) specific to the payment instrument, said query message aiming at getting confirmation that the payment instrument is of the first type and, if so:
the lookup server is configured to send to the merchant application a response (301) containing identification data (41) assigned to the bank application,
the merchant application is configured to offer the user to retrieve the CSC from the bank application, and following an agreement of the user, the merchant application is configured to use the identification data (41) to query the bank application for the CSC,
the bank application is configured to send the CSC to the merchant application only if the bank application performed a successful authentication of the user, and
upon getting a consent of the user to continue the payment transaction, the merchant application is configured to continue the payment transaction with both said identifier (51) and CSC (55).

11. The payment system according to claim 10, wherein the identification data (41) comprises at least a Uniform Resource Identifier assigned to the bank application.

12. The payment system according to claim 10, wherein the merchant application is configured to query the bank application for the CSC by sending a query message (202) containing a reference (53) of the payment instrument which is a serial number of the payment instrument, a hash of said identifier (51) of the payment instrument, an extract of said identifier (51) of the payment instrument or an expiration date of the payment instrument.

13. The payment system according to claim 10, wherein the merchant application is configured to get the consent of the user provided by the user during the payment transaction or to retrieve the consent of the user from a pre-populated non-volatile memory accessible by the merchant application.

14. The payment system according to claim 10, wherein the merchant application is configured to offer the user to retrieve the CSC from the bank application by triggering the display of a redirect button on a device (10) of the user.

15. The payment system according to claim 10, wherein the payment instrument is a payment chip card, a payment bracelet, a payment ring, a digital payment card hosted by a user's device or a virtual payment card whose payment parameters are accessible by the user through a card management system.
